# EUROPÄISCHE PATENTSCHRIFT

(11) **EP 0 490 079 B1**
(45) Veröffentlichungstag und Bekanntmachung des Hinweises auf die Patenterteilung: **29.01.1997**
(21) Anmeldenummer: 91118794.6
(22) Anmeldetag: 04.11.1991
(51) Int. Cl.: H02H 9/04, H02H 7/06

(54) **Überspannungsschutzvorrichtung**
Overvoltage protecting device
Dispositif protecteur contre la surtension

(30) Priorität: 10.12.1990 DE 4039404
(43) Veröffentlichungstag der Anmeldung: 17.06.1992
(73) Patentinhaber: SGS-THOMSON MICROELECTRONICS GMBH, 85630 Grasbrunn (DE)
(72) Erfinder: Heitzmann, Wolfgang, W-8090 Wasserburg (DE)
(74) Vertreter: Klunker . Schmitt-Nilson . Hirsch

(56) Entgegenhaltungen:
- EP-A- 0 118 779
- DE-A- 2 009 880
- DE-A- 3 803 259
- FR-A- 2 382 789
- FR-A- 2 553 944
- US-A- 3 488 560

## Beschreibung

Die Erfindung betrifft eine Überspannungschutzvorrichtung zum Schutz der elektrischen Anlage eines Fahrzeugs vor Überspannungen, wobei das Fahrzeug ein von einem elektrischen Generator gespeistes Bordnetz und daran angeschlossene Einrichtungen aufweist, mit einer steuerbaren Schaltereinrichtung, die im Überspannungsfall in einen den Generator kurz schließenden Schaltzustand gesteuert wird.

Kraftfahrzeuge besitzen üblicherweise eine Fahrzeugelektrik mit einer Vielzahl elektrischer Einrichtungen, die aus einem Bordnetz gespeist werden. Das Bordnetz seinerseits wird von einem elektrischen Generator gespeist. Außerdem ist an das Bordnetz eine Batterie angeschlossen, aus welcher das Bordnetz dann gespeist wird, wenn der Generator zu wenig oder überhaupt keine elektrische Energie abgibt. Letzteres ist der Fall, wenn der Motor des Fahrzeugs steht.

Während des Betriebs kann es in dem Bordnetz zu Überspannungen kommen, beispielsweise bei Unterbrechungen zwischen Batterie und Bordnetz, die durch Abklemmen der Batterie während des Laufens des Motors und damit des Generators oder aufgrund von Wackelkontakten verursacht werden können. Überspannungen können auch bei sogenannten Lastabwürfen entstehen, d.h. wenn elektrische Einrichtungen des Fahrzeugs im Betrieb abgeschaltet werden, beispielsweise Lüftermotoren, Stellmotoren für die Sitzverstellungen, Stellmotoren für die Fensterheber, usw. Infolge solcher Lastabwürfe kommt es zu einem Abbau des im Generator vorhandenen Magnetfeldes, und ein solcher Abbau führt bekanntlich zu induktiv erzeugten Spannungsimpulsen, die erhebliche Spannungs- und Energiewerte erreichen können. Die Impulshöhe hängt von der Felderregung des Generators, von dessen Drehzahl und von der am Generator im Augenblick des Abtrennens der Batterie oder des Lastabwurfs verbleibenden Last ab.

Näheres hierzu ist entnehmbar einerseits DIN 40 839 Teil 1, insbesondere Abschnitt 4.6.5, ISO/TR 7637/1-Abschnitt 2.3.2.5 und andererseits einer Veröffentlichung der Fa. Bosch mit dem Titel "Überspannungsschutz".

Solche Spannungsspitzen bereiten in den elektrischen Anlagen moderner Kraftfahrzeuge Probleme. Viele elektrische Einrichtungen solcher Fahrzeuge, beispielsweise Bordcomputer, elektronische Steuergeräte für Antiblockiersysteme, die Steuerelektronik für den Verbrennungsmotor, sind mit integrierten Halbleiterschaltungen aufgebaut, die durch Überspannungen nicht nur in Fehlfunktion gebracht sondern dauerhaft beschädigt werden können.

Es sind verschiedene Versuche bekannt, solchen schädlichen Störspannungsimpulsen Herr zu werden. Eine Möglichkeit sind sogenannte Suppressor-Dioden, die entweder in jeder der elektrischen Einrichtungen der Fahrzeugelektrik oder zentral am Generator angeordnet sind. Solche Dioden sollen die Störspannungsimpulse auf ein unschädliches Spannungsmaximum begrenzen. Dies ist allerdings mit folgenden Problemen verbunden.

Ein wesentlicher Teil der Energie beim Lastabwurf wird in der Suppressor-Diode in Wärme umgesetzt. Rechenbeispiele zeigen, daß es dabei in der Suppressor-Diode zu einer Temperaturerhöhung von etwa 90° C kommen kann. Bei Umgebungstemperaturen von ca. 100° C, wie sie im Motorraum eines Kraftfahrzeuges auftreten können, entstehen somit Chip-Temperaturen von 190° C. Diese Temperaturen liegen über den für gängige Halbleiterbauelemente üblicherweise verträglichen Temperaturen.

Hinzu kommt, daß die von der Suppressor-Diode begrenzte Spannung stark stromabhängig ist und daher der einzukalkulierende Spannungstoleranzbereich erheblich vergrößert ist. Der Toleranzbereich der zu begrenzenden Spannung liegt bei Suppressor-Dioden bei Berücksichtigung von deren Stromabhängigkeit zwischen 24 V minimal und 40 V maximal. Dies führt zu erheblichen Problemen im Bordnetz, da weitere Schutzdioden zur Begrenzung geringerer Energieimpulse oberhalb dieses Toleranzfeldes angeordnet sein müssen. Somit ist das Bordnetz mit positiven Energieimpulsen bis 50 V belastet, trotz erheblichem Aufwand an Schutzdioden.

Aufgrund dieser zu berücksichtigenden Spannungsspitzen müssen die in den elektronischen Einrichtungen und Modulen eingesetzten Halbleiterbauelemente eine Durchbruchspannung V_{CEO} von ≥ 50 V besitzen. Das führt zu erheblichen Mehrkosten, weil Hochvolttechnologien verwendet werden müssen und die erforderliche Chipfläche dabei größer wird.

Aus der bereits genannten Veröffentlichung "Überspannungsschutz" ist es bekannt, zur Vermeidung von Überspannungen den Generator mit Hilfe eines Thyristors kurzzuschließen, wenn die Generatorspannung eine bestimmte Überspannungsschwelle überschreitet. In diesem Fall wird der Thyristor über sein Gate gezündet, wodurch er in einen Zustand niedriger Impedanz übergeht, die für den Generator praktisch einen Kurzschluß darstellt. Allerdings kann dieser Kurzschlußzustand nur dadurch beendet werden, daß das Zündschloß des Fahrzeugs geöffnet wird, um die Spannungsversorgung der Überspannungsschutzschaltung und damit des Thyristors zu unterbrechen.

Dieses Problem wird mit einer ebenfalls aus der Veröffentlichung "Überspannungsschutz" bekannten Überspannungsschutzschaltung überwunden, die eine Einschaltautomatik aufweist, d.h. nach Beendigung der Störspannung den Kurzschluß des Generators wieder aufhebt. Zu diesem Zweck ist dem Thyristor ein Relais in Reihe geschaltet, das im Fall des Zündens des Thyristors von dem Generatorkurzschlußstrom durchflossen wird und als Folge davon einen die Anoden-Kathoden-Strecke des Thyristors überbrückenden Pfad bildet. Dadurch wird einerseits die Anoden-Kathoden-Strecke des Thyristors kurzgeschlossen, so daß dieser abschalten kann. Und andererseits wird dadurch der Generator auch nach dem Abschalten des Thyristors im kurzgeschlossenen Zustand gehalten. Das Relais öffnet den Schalter erst dann wieder, wenn der Generatorstrom in der Relaiswicklung auf einen bestimmten Wert abgefallen ist.

Das Relais dieser bekannten Überspannungsschutzschaltung führt zu Problemen. Einerseits sind Relais als elektromechanische Bauelemente mechanischem Verschleiß ausgesetzt und haben daher eine entsprechend eingeschränkte Lebensdauer. Andererseits führen Relais zu Toleranzproblemen, beispielsweise infolge von Alterungserscheinungen, Herstellungsstreuungen usw. Um die empfindlichen Halbleiterbauelemente der Fahrzeugelektrik sicher zu schützen, muß man daher wieder einen relativ großen Spannungsbereich einkalkulieren und die Halbleiterbauelemente doch wieder für relativ hohe Spannungsfestigkeit auslegen. Überdies sind Relais aufgrund ihrer induktiven Eigenschaften Bauelemente, die vergleichsweise langsam auf elektrische Änderungen reagieren.

Aus dem Dokument DE-A-2 009 880 ist ein Überspannungsschutz für Fahrzeug-Bordnetzanlagen bekannt, die von selbsterregten KlauenpolDrehstromgeneratoren mit Transistorspannungsregler und nachgeschalteten Gleichrichtern versorgt werden, wobei ab einer bestimmten Generatorüberspannung ein Steuerkreis anspricht und mittels eines den Ausgangsklemmen des Generators quergeschalteten Thyristors ein künstlicher Kurzschluß zwischen diesen bei gleichzeitiger Sperrung des Erregerstromes hervorruft. Dem kurzschließenden Thyristor ist neben einem Steuerkreis ein weiterer, jedoch auf die Generatorspannung träger reagierender Steuerkreis mit herabgesetztem Ansprechwert zugeordnet.

Aus dem Dokument FR-A-2 382 789 ist eine Einrichtung zum Schutz von Bordnetzen von Fahrzeugen bekannt, die einen elektrischen Generator mit wenigstens einer zu einer Spannungsquelle parallel geschalteten Zenerdiode zur Begrenzung der auftretenden Spannungen aufweist. Zusätzlich ist eine Überspannungsschutzvorrichtung vorgesehen, die einen zur Generatorspannung parallel geschalteten steuerbaren Schalter aufweist. Dieser steuerbare Schalter ist in einen stromleitenden Zustand versetzbar, wenn wenigstens ein Schwellenwert eines elektrischen Parameters der elektrischen Anlage überschritten ist, während die Zenerdiode im Avalanche-Durchbruch beansprucht ist. Die aus dem Dokument bekannte Einrichtung weist einen Thyristor auf.

Aus dem Dokument FR-A-2 553 944 ist eine Störschutzschaltung für integrierte Schaltungen bekannt, die insbesondere für integrierte Schaltungen in Kraftfahrzeugen geeignet ist. In dieser bekannten Schaltung sind ein erster Transistor, ein zweiter Transistor, ein Komparator und ein dem Emitter des ersten Transistors vorgeschalteter Meßwiderstand vorgesehen. Die am Meßwiderstand abfallende Spannung wird mittels des Komparators mit einer Referenzspannung verglichen. Das Ausgangssignal des Komparators steuert die Basis des zweiten Transistors an, und die Basis des ersten Transistors ist mit dem Kollektor des zweiten Transistors und der Kollektor des ersten Transistors mit dem Emitter des zweiten Transistors verbunden.

Der Erfindung liegt die Aufgabe zugrunde, eine Überspannungsschutzvorrichtung der eingangs angegebenen Art verfügbar zu machen, die auch bei Verwendung von Halbleiterbauelementen mit niederiger Durchbruchsspannung zu einem sicheren Schutz vor Überspannungen führt.

Diese Aufgabe wird erfindungsgemäß gelöst durch eine Überspannungsschutzvorrichtung zum Schutz der elektrischen Anlage eines Fahrzeuges vor Überspannungen gemäß den Merkmalen des Patentanspruches 1.

Den abhängigen Patentansprüchen 2 bis 11 sind Weiterentwicklungen des Gegenstandes des Patentanspruches 1 entnehmbar.

Die erfindungsgemäße Lösung dieser Aufgabe steht im Zusammenhang damit, daß die Schaltereinrichtung eine dem Generator parallel geschaltete Schalttransistoreinrichtung aufweist, daß eine mit der Generatorspannung beaufschlagte Auswerteeinrichtung vorgesehen ist, die beim Überschreiten einer vorbestimmten Überspannung schwelle ein erstes Auswertungssignal und beim nachfolgenden Unterschreiten einer vorbestimmten Niederspannungsschwelle ein zweites Auswertungssignal abgibt, und daß eine mit den Auswertungsignalen beaufschlagbare, die Schalttransistoreinrichtung steuernde Speichereinrichtung vorgesehen ist, die das jeweils erhaltene Auswertungssignal bis zum Erhalt des jeweils anderen Auswertungsignals speichert und die Schalttransistoreinrichtung währed des Speicherns des ersten Auswertungssignals in den Generator kurzschließenden Schaltzustand und während des Speicherns des zweiten Auswertungssignals in den den Generator nicht kurzschließenden Schaltzustand steuert.

Dadurch, daß man die Generatorspannung auf das Überschreiten der Überspannungsschwelle und das Unterschreiten der Niederspannungsschwelle überwacht, kann man das Schalten der Schalttransistoreinheit bei praktisch exakten Spannungsschwellen gewährleisten. Man kann die Spannungsschwellen beliebig legen, so daß ein Kurzschließen des Generators auch beim Überschreiten relativ geringer Überspannungen sicher erfolgen kann. Desweiteren erfolgt auch das Zurückschalten zu nicht kurzgeschlossenem Generator mit großer Exaktheit hinsichtlich der wählbaren Niederspannungsschwelle, anders als im Fall der Verwendung eines Relais. Dadurch, daß man das von der Auswerteeinrichtung jeweils gelieferte Auswertungssignal solange speichert, bis das andere Auswertungssignal auftritt, und man den gespeicherten Wert zum Steuern des Schaltzustands der Schalttransistoreinrichtung verwendet, ist sichergestellt, daß der bei Überschreiten der Überspannungsschwelle kurzgeschlossene Generator aus seinem Kurzschluß mit Sicherheit erst befreit wird, wenn das Unterschreiten der Niederspannungsschwelle festgestellt worden ist.

Die Erfindung wird nun anhand von Ausführungsformen näher erläutert. In den Zeichnungen zeigen:
- Fig. 1: ein Beispiel einer Spannungsversorgungsschaltung für die Speisung des Bordnetzes eines Fahrzeugs, die mit einer Überspannungsschutzvorrichtung ausgerüstet ist;
- Fig. 2: Strom- und Spannungsverläufe bei einer Spannungsversorgungsschaltung nach Fig. 1, die nicht mit einer Überspannungsschutzvorrichtung versehen ist;
- Fig. 3: eine Blockdarstellung einer Ausführungsform einer erfindungsgemäßen Überspannungsschutzvorrichtung;
- Fig. 4: eine mehr ins Einzelne gehenden Ausgestaltung der in Fig. 3 gezeigten Ausführungsform;
- Fig. 5: Strom- und Spannungsverläufe der in Fig. 1 gezeigten Spannungsversorgungsschaltung, die mit einer erfindungsgemäßen Überspannungsschutzvorrichtung ausgerüstet ist; und
- Fig. 6: den in Fig. 5(b) gezeigten Spannungsverlauf in vergrößerter und damit deutlicherer Darstellung.

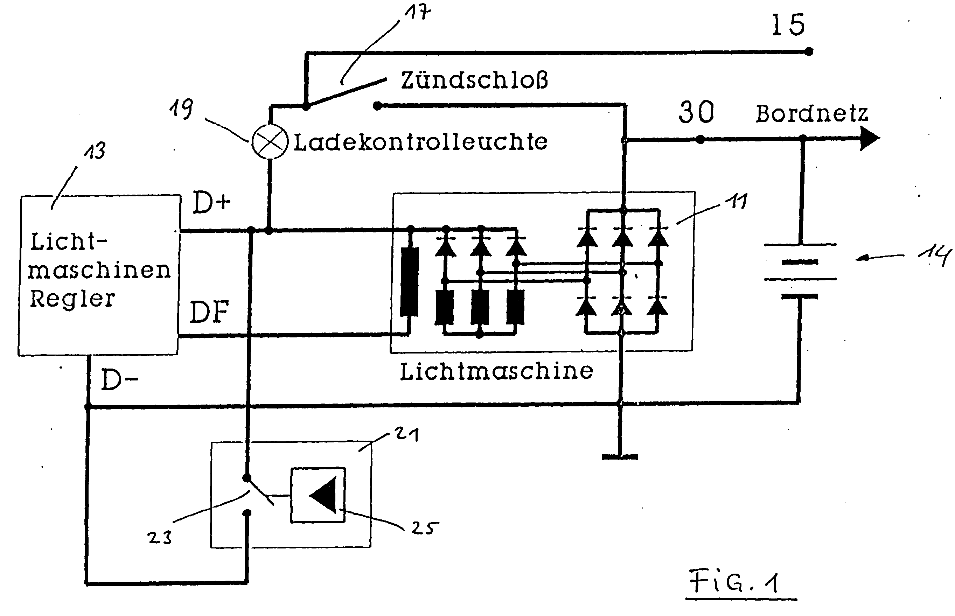

Fig. 1 zeigt eine herkömmliche Spannungsversorgungsschaltung für ein Fahrzeugbordnetz, jedoch unter Einfügung einer erfindungsgemäßen Überspannungsschutzvorrichtung. Dabei sind Anschlußpunkte für das Bordnetz in üblicher weise mit "15" und "30" bezeichnet.

Ein Generator 11, häufig auch Lichtmaschine genannt, ist über Anschlüsse D+, D- und DF an einen Lichtmaschinenregler 13 üblicher und daher hier nicht weiter erläuterter Art angeschlossen. Parallel zum Generator 11 ist eine Batterie 14 geschaltet. Diese übernimmt die Energieversorgung des Bordnetzes, wenn der Generator nicht genügend oder gar keine elektrische Energie liefert, weil er sich zu langsam dreht bzw. sich bei stehendem Verbrennungsmotor des Fahrzeugs überhaupt nicht dreht. Über den Anschluß 30 erfolgt die Einspeisung in das Bordnetz. Mittels eines Zündschlosses 17 kann der Generator in das Bordnetz geschaltet werden. In Reihe zum Zündschloß 17 liegt eine Ladekontrollleuchte 19.

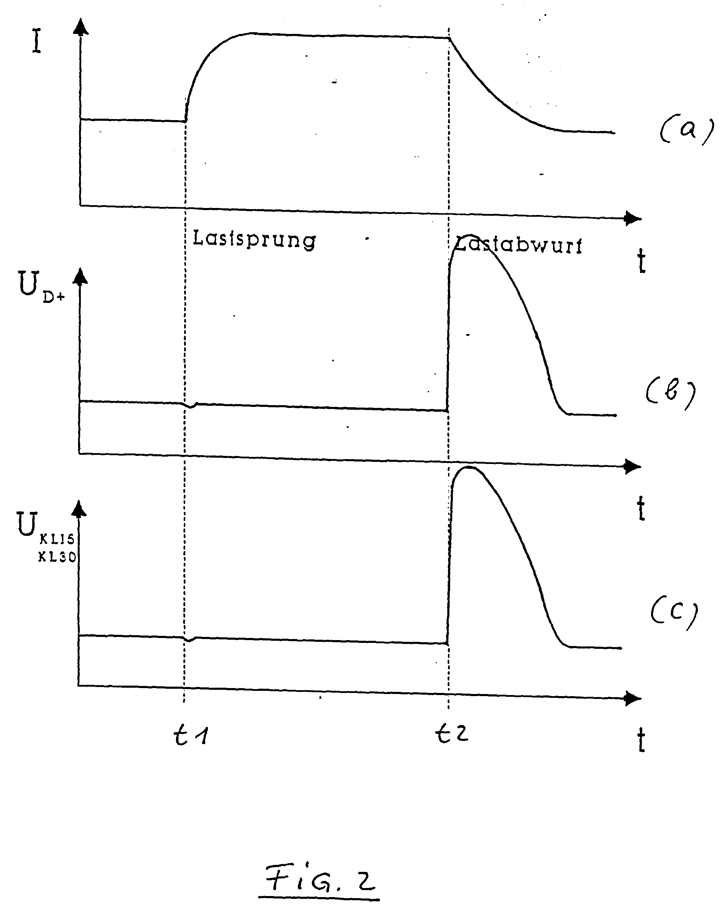

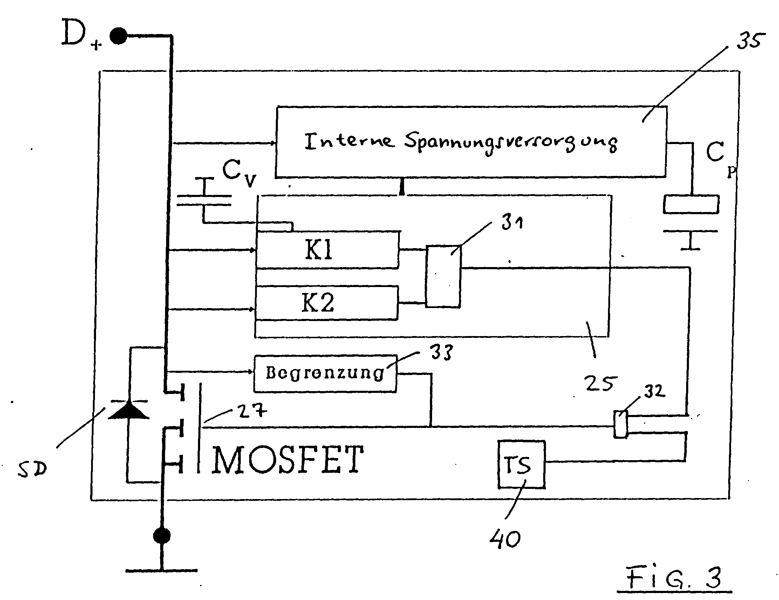

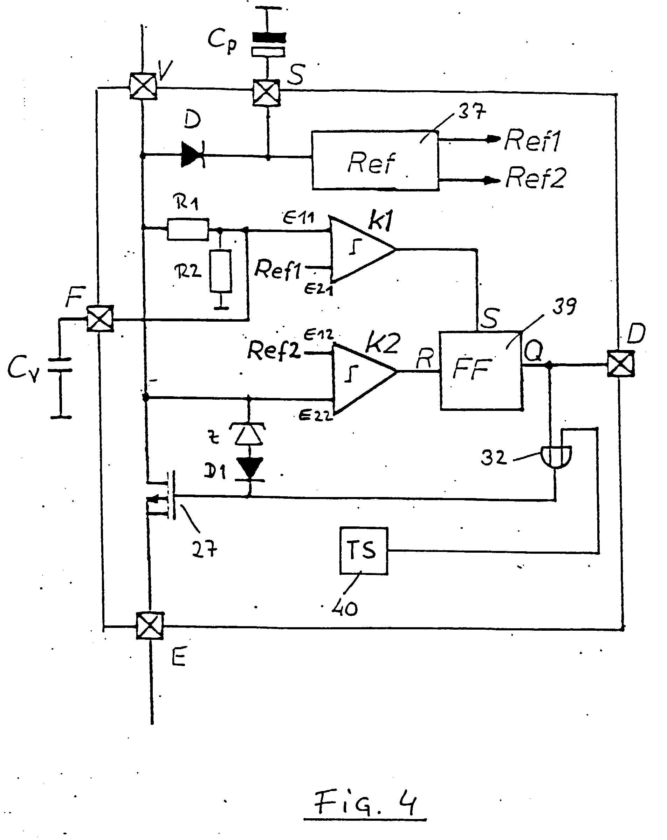

Zwischen die Anschlüsse D+ und D- ist eine erfindungsgemäße Überspannungsschutzvorrichtung 21 geschaltet, die einen in Fig. 1 geöffnet gezeigten Schalter 23 und eine den Schalter 23 steuernde Steuerschaltung 25 aufweist und nachfolgend anhand der Fig. 3 und 4 noch näher erläutert wird. Zunächst sei anhand der Fig. 2 das Verhalten der in Fig. 1 gezeigten Versorgungsspannungsschaltung betrachtet, wenn diese nicht mit der Überspannungsschutzvorrichtung ausgerüstet ist. Fig. 2 zeigt in Kurvenverläufen (a), (b) und (c) den Generatorerregerstrom bzw. die Generatorspannung bzw. die Bordnetzspannung in Abhängigkeit von der Zeit t. Dabei ist angenommen, daß zum Zeitpunkt t1 ein Lastsprung auftritt, der zum Zeitpunkt t2 in einen Lastabwurf mündet. Während des Lastsprungs wird vom Generator ein erhöhter Strom gefordert. Aufgrund der induktiven Eigenschaften des Generators nimmt der Erregerstrom ab dem Zeitpunkt t2 nur allmählich ab. Diese induktiven Eigenschaften des Generators führen auch zu einem Spannungsimpuls, der mit der Lastabschaltung zum Zeitpunkt t2 beginnt, wie Fig. 2b zeigt. Dieser Spannungsimpuls gelangt ungehindert in das Bordnetz und damit zu den verschiedenen elektrischen Einrichtungen des Fahrzeugs, die an das Bordnetz angeschlossen sind.

Diesem Störspannungsimpuls begegnet die Überspannungsschutzvorrichtung 21. Diese wird nun anhand der Fig. 3 und 4 erläutert.

Fig. 3 zeigt eine Steuerschaltung 25 und als Schalter einen MOSFET 27. Der MOSFET 27 ist zwischen den Anschluß D+ und Masse geschaltet und damit parallel zum Generator 11.

Die Steuerschaltung 25 umfaßt einen ersten Komparator K1 und einen zweiten Komparator K2, die je mit der Generatorspannung am Anschluß D+ beaufschlagt werden. Mit Hilfe von in Fig. 3 nicht gezeigten Referenzspannungen wird den Komparatoren K1 und K2 eine Ansprechschwelle von beispielsweise 5 V bzw. 80 mV vorgegeben. Diese Ansprechschwellen bilden eine Überspannungsschwelle bzw. eine Niedrigspannungsschwelle.

Die Ausgänge der beiden Komparatoren K1 und K2 sind an zwei Eingänge einer Speichereinrichtung 31 angeschlossen, deren Ausgang an das Gate des MOSFET 27 angeschlossen ist.

Überschreitet die Generatorspannung die Überspannungsschwelle, zeigt dies der Komparator K1 durch Abgabe eines ersten Auswertungssignals an die Speichereinrichtung 31 an. Aufgrund der Eingabe des ersten Auswertungssignals gibt die Speichereinrichtung 31 ein Steuersignal ab, das den MOSFET 27 in leitenden Zustand schaltet. Dies führt zum Kurzschluß des Generators 11. Da das erste Auswertungssignal von der Speichereinrichtung 31 festgehalten wird, bleibt der MOSFET 27 im leitenden Zustand und bleibt der Generator kurzgeschlossen, auch wenn die Generatorspannung zwischenzeitlich wieder die Überspannungsschwelle unterschritten haben sollte. Dieser Zustand dauert an, bis die Generatorspannung die Niedrigspannungsschwelle unterschreitet, was dazu führt, daß der Komparator K2 ein zweites Auswertungssignal an die Speichereinrichtung 31 gibt. Daraufhin liefert die Speichereinrichtung 31 an den MOSFET 27 ein Steuersignal, das den MOSFET 27 in den Sperrzustand schaltet und somit den Kurzschluß des Generators 11 beendet. Die Speichereinrichtung 31 hält von da ab das zweite Auswertungssignal fest, bis ihr bei einem nachfolgenden weiteren Überschreiten der Überspannungsschwelle vom Komparator K1 wieder das erste Auswertungssignal geliefert wird.

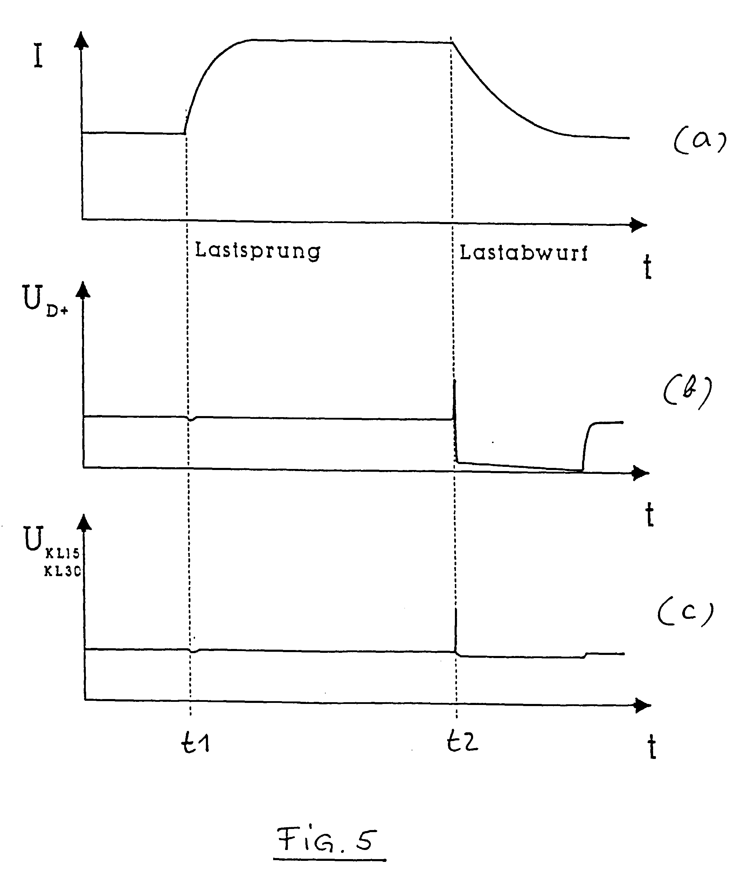

Die Auswirkung der erfindungsgemäßen Überspannungsschutzvorrichtung 21 ist aus Fig. 5 ersichtlich. Deren Kennlinien a, b und c zeigen den Generatorerregerstrom Iₑᵣᵣ bzw. die Generatorspannung U_{D+} bzw. die Bordnetzspannung U_{KL15} bzw. U_{KL30} in Abhängigkeit von der Zeit. Geht man wieder von einem Lastsprung und nachfolgendem Lastabwurf ab, wie er in Fig. 5a gezeigt ist, kommt es im wesentlichen zum Zeitpunkt t2 aufgrund des Schutzeingriffs der Überspannungsschutzvorrichtung 21 zu einem steilen Abfall der Generatorspannung U_{D+} auf einen sehr niedrigen Spannungswert.

Wie Fig. 5c zeigt, bleibt die Bordnetzspannung U_{KL15} bzw. U_{KL30} während der Lastabwurfszeit im wesentlichen unverändert, bedingt durch die Pufferung der Batterie.

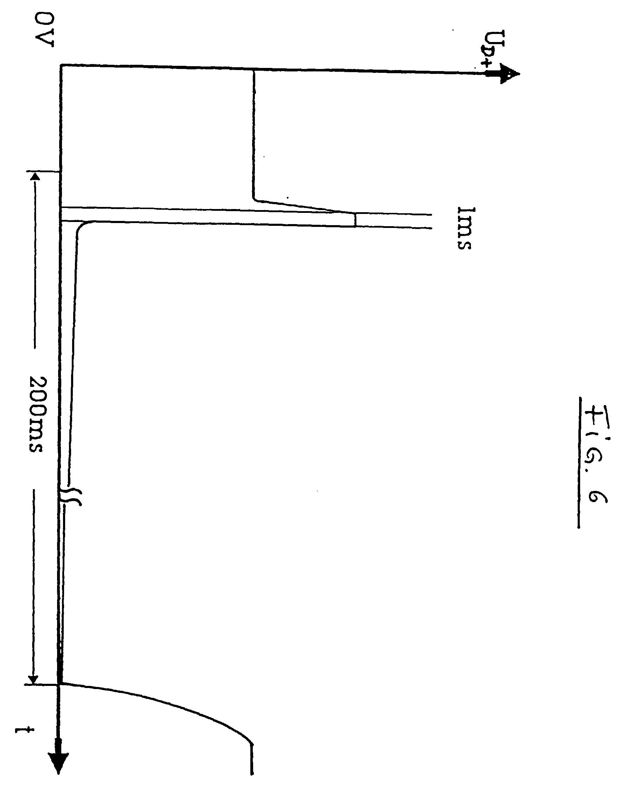

Fig. 5 zeigt in den Kennlinien (b) und (c) eine nadelimpulsförmige kurzfristige Erhöhung der Generatorspannung bzw. der Klemmenspannung. Dies wird nun näher betrachtet anhand der Fig. 6, die eine vergrößerte Darstellung des Verlaufs der Generatorspannung U_{D+} im Bereich der Lastabwurfszeit zeigt.

Zu Beginn des Lastabwurfs kommt es zu einer nadelimpulsförmigen Erhöhung der Generatorspannung, allerdings mit Begrenzung der Impulshöhe. Danach erfolgt ein steiler Rückgang der Generatorspannung auf nahezu 0 V. Der begrenzte Nadelimpuls kommt zustande durch das Zusammenwirken einer Verzögerungsschaltung mit einem Verzögerungskondensator C_{V} und einer Begrenzungsschaltung 33. Die Verzögerungsschaltung weist eine vorbestimmte Verzögerungszeitdauer auf und bewirkt, daß die Überspannungsschutzvorrichtung 21 nur dann in den Schutzzustand schaltet, wenn Störspannungsimpulse auftreten, deren Breite größer ist als die Verzögerungszeitdauer der Verzögerungsschaltung. Damit wird erreicht, daß die Überspannungsschutzvorrichtung 21 nicht bei jedem Störimpuls (siehe definierte Impulse DIN40839) und damit zu häufig anspricht. Innerhalb der Verzögerungszeitdauer könnte nun die Generatorspannung unkontrolliert ansteigen. Dem wirkt die Begrenzungsschaltung 33 entgegen, mittels welcher die Generatorspannung während der Verzögerungszeitdauer auf eine vorbestimmte Begrenzungsschwelle begrenzt wird. Zu diesem Zweck wird der MOSFET 27 während des Begrenzungseinsatzes der Begrenzungsschaltung 33 teildurchgesteuert.

Während des Kurzschlusses des Generators, während welchem die Generatorspannung D+ gemäß Fig. 6 auf einen sehr niedrigen Wert abgesenkt wird, wird die Spannungsversorung der Schaltungskomponenten der Überspannungsschutzvorrichtung 21 mit Hilfe einer internen Spannungsversorgungsquelle 35 aufrecht erhalten. Zu diesem Zweck ist ein Kondensator C_{P} vorgesehen, der zu den Zeiten, während welcher der Generator nicht kurzgeschlossen ist, auf die Generatorspannung aufgeladen wird.

Eine Ausführungsform der erfindungsgemäßen Überspannungsvorrichtung 21 in Form einer integrierten Halbleiterschaltung ist in Fig. 4 gezeigt. Die integrierte Schaltung weist fünf Anschlußstellen auf. Eine Anschlußstelle V ist mit dem Anschluß D+ der Spannungsversorgungsschaltung in Fig. 1 verbunden. Eine Anschlußstelle E ist mit dem Masseanschluß D-in Fig. 1 verbunden. Eine Anschlußstelle F dient dem Anschluß des Verzögerungskondensators C_{V}. Über eine Anschlußstelle S ist der Kondensator C_{P} der internen Spannungsversorgungsquelle angeschlossen. Eine letzte Anschlußstelle D kann über eine Auswerteschaltung weiter verwendet oder mit einer Anzeigevorrichtung verbunden werden.

Gemäß Fig. 4 sind zwei Komparatoren K1 und K2 vorgesehen, die je mit einem ersten Eingangsanschluß E11 bzw. E22 und mit einem zweiten Eingangsanschluß E21 bzw. E12 versehen sind. Ihre Ausgangsanschlüsse sind mit dem Setzeingang S bzw. dem Rücksetzeingang R eines Flipflop 39 verbunden. Dessen Ausgang Q ist an das Gate des MOSFET 27 und an den Auswerteausgang D angeschlossen.

Die Eingänge E11 und E22 der Komparatoren K1 bzw. K2 sind je mit der Anschlußstelle V verbunden, E22 direkt und E11 über einen Widerstand R1. Der Widerstand R1 gehört zu einem Spannungsteiler R1 und R2, der Zusammen mit dem Verzögerungskondensator C_{V} die Verzögerungschaltung bildet. An die Eingänge E21 und E12 der Komparatoren K1 bzw. K2 ist eine erste Referenzspannung Ref1 bzw. eine zweite Referenzspannung Ref2 angeschlossen. Beispielsweise handelt es sich bei Ref1 um eine Spannung von 5 V und bei Ref2 um eine Spannung von 80 mV.

Zwischen die Anschlußstellen V und S ist eine Diode D geschaltet, mittels welcher verhindert wird, daß der Kondensator C_{P} während des Kurzschließens des Generators über den MOSFET 27 entladen wird.

Die Begrenzungsschaltung 33 wird durch eine Reihenschaltung aus einer Zenerdiode Z und einer Diode D1 gebildet. Wenn die Generatorspannung eine durch diese Begrenzungsschaltung 33 vorbestimmte Begrenzungsschwelle übersteigt, wird der MOSFET 27 teildurchgesteuert und damit eine Begrenzung der Generatorspannung auf einen vorbestimmten Wert bewirkt.

Eine thermische Schutzeinrichtung 40 schaltet bei Erreichen einer bestimmten oberen Chip-Temperatur-Schwelle den MOSFET 27 durch. Erreicht die Chiptemperatur eine untere Chip-Temperatur-Schwelle wird der MOSFET 27 wieder ausgeschaltet. Beispielsweise liegt die obere Temperaturschwelle bei 150 °C. und die untere Temperaturschwelle bei 120 °C. Der Ausgang der thermischen Schutzeinrichtung 40 ist mit einem ersten Eingang einer ODER-Verknüpfungsschaltung 32 verbunden, die einen zweiten Eingang aufweist, der mit dem Ausgang der Speichereinrichtung 31 verbunden ist. Der Ausgang der ODER-Verknüpfungsschaltung 22 ist mit dem Gateanschluß des MOSFET 27 verbunden.

Die in Fig. 4 gezeigte Schaltung arbeitet folgendermaßen:
Steigt die Spannung am Anschluß D+ wegen eines auftretenden Überspannungsimpulses an, schaltet der Komparator K1 nach Ablauf der durch die Verzögerungschaltung vorgegebenen Verzögerungszeit in einen Zustand, in dem er ein Setzsignal auf den Setzeingang S des Flipflop 39 gibt. Das daraufhin am Ausgang Q des Flipflop 39 entstehende Signal steuert den MOSFET 27 in den durchgeschalteten Zustand. Wegen der Speicherwirkung des Flipflops 39 bleibt der MOSFET durchgeschaltet, auch wenn die Spannung am Eingang Ell des Komparators K1 gesunken ist. Sinkt der Strom über dem MOSFET 27 am Ende des Überspannungsimpulses auf einen bestimmten Wert und wird dadurch die Niedrigspannungsschwelle unterschritten, spricht der Komparator K2 an und setzt das Flipflop 39 über dessen Rücksetzeingang R zurück. Dadurch wird der MOSFET 27 wieder ausgeschaltet.

An die Anschlußstelle D in Fig. 4 kann sowohl eine Diagnose- oder Auswerteeinrichtung als auch eine Anzeigeeinrichtung angeschlossen werden, mittels welcher eine Anzeige vorgenommen wird, die dem Fahrer des Fahrzeugs das Auftreten einer Überspannung mit einhergehendem Kurzschluß des Generators signalisiert. Dieser Kurzschluß wird auch durch die Ladekontrollleuchte 19 an Leitung D+ angezeigt. Wenn häufig Überspannungen und damit einhergehendes Kurzschließen des Generators angezeigt wird, kann dies den Benutzer des Fahrzeugs warnen, daß die Bordelektrik des Kraftfahrzeugs einen Fehler aufweist.

Bei zu häufigen energiereichen Überspannungsimpulsen, die z.B. durch Wackelkontakte der Bordnetzleitungen oder bei defektem Lichtmaschinenregler auftreten können, schützt die thermische Schutzschaltung 40 die Überspannungsschutzeinrichtung vor Zerstörung, wobei die Funktion der Überspannungsschutzschaltung erhalten bleibt.

Bei der in Fig. 3 und Fig. 4 dargestellten Ausführungsform ist der Source-Drain-Strecke des MOSFET 27 eine Schutzdiode SD parallelgeschaltet.

Diese schützt vor negativen Störimpulsen auf Leitung D+, siehe ISO/TR7637/1 Abschnitt 2.3.2.7. Bei Falschpolung der Überspannungsschutzeinrichtung wird die Diode leitend und die Ladekontrolleuchte 19 brennt dauernd.

Die erfindungsgemäße Überspannungsschutzeinrichtung weist folgende Vorteile auf:

Beim Auftreten eines Überspannungsimpulses wird durch Klemmen auf einen durch die Begrenzungsschaltung 33 vorbestimmten Spannungswert während der Verzögerungsphase die maximale Spannung am Bordnetz exakt festgelegt. Die Spannungsfestigkeit der gesamten Bordelektronik kann damit auf ein niedriges Niveau gelegt werden. Dadurch läßt sich eine erhebliche Kosteneinsparung erreichen.

Durch die Verwendung eines elektronischen Schalters arbeitet die Überspannungsschutzeinrichtung verschleißfrei und erschütterungsunempfindlich. Sie erreicht erheblich kleinere Abmessungen als eine mit Relais arbeitende Überspannungsschutzeinrichtung und ist dieser gegenüber erheblich kostengünstiger.

Die erfindungsgemäße Überspannungsschutzeinrichtung ist in jedem Bordnetz einsetzbar.

## Patentansprüche

1. Überspannungsschutzvorrichtung zum Schutz der elektrischen Anlage eines Fahrzeugs vor Überspannungen, wobei das Fahrzeug ein von einem elektrischen Generator (11) gespeistes Bordnetz und daran angeschlossene Einrichtungen aufweist,
a) mit einer steuerbaren Schaltereinrichtung (27), die im Überspannungsfall in einen den Generator (11) kurzschließenden Zustand gesteuert wird,
**dadurch gekennzeichnet**,
b) daß die Schaltereinrichtung (27) eine dem Generator (11) parallelgeschaltete Schalttransistoreinrichtung (27) aufweist,
c) daß eine mit der Generatorspannung beaufschlagte Auswerteeinrichtung (K1, K2) vorgesehen ist, die beim Überschreiten einer vorbestimmten Überspannungsschwelle ein erstes Auswertungssignal und beim nachfolgenden Unterschreiten einer vorbestimmten Niederspannungsschwelle an der kurzgeschlossenen Schalttransistoreinrichtung ein zweites Auswertungssignal abgibt,
d) daß eine mit den Auswertungssignalen beaufschlagbare, die Schalttransistoreinrichtung (27) steuernde Speichereinrichtung vorgesehen ist, die das jeweils erhaltene Auswertungssignal bis zum Erhalt des jeweils anderen Auswertungssignals speichert und die Schalttransistoreinrichtung (27) während des Speicherns des ersten Auswertungssignals in den den Generator (11) kurzschließenden Schaltzustand und während des Speicherns des zweiten Auswertungssignals in den den Generator (11) nicht kurzschließenden Schaltzustand steuert,
e) daß die Schalttransistoreinrichtung durch einen mit seiner Source-Drain-Strecke dem Generator (11) parallel geschalteten MOSFET (27) gebildet ist,
f) daß die Speichereinrichtung (31) ein Flipflop (39) aufweist, dessen Setzeingang (S) das erste Auswertungssignal und dessen Rücksetzeingang (R) das zweite Auswertungssignal zugeführt werden und dessen Ausgangssignal der Schaltereinrichtung (27) als Schaltsteuersignal zugeführt wird, und
g) daß der Überspannungsschutzvorrichtung eine interne Spannungsversorgungsquelle (35, Cₚ) zugeordnet ist, welche die Überspannungsschutzeinrichtung während der Dauer des Kurzschließens des Generators (11) mit der erforderlichen Betriebsspannung versorgt.

2. Überspannungsschutzvorrichtung nach Anspruch 1, dadurch gekennzeichnet,
a) daß die Auswerteeinrichtung einen ersten und einen zweiten Komparator (K1 ,K2) aufweist, die je einen Spannungsüberwachungseingang (E11,E22), einen Referenzspannungseingang (E21,E12) und einen mit der Speichereinrichtung (31,39) gekoppelten Komparatorausgang aufweisen,
b) daß die Spannungsüberwachungseingänge (E11, E22) beider Komparatoren (K1, K2) mit der Generatorspannung oder einer dieser entsprechenden Spannung beaufschlagt werden,
c) daß dem Referenzspannungseingang (E31) des ersten Komparators (K1) eine der Überspannungsschwelle entsprechende erste Referenzspannung (Ref1) und dem Referenzspannungseingang (E12) des zweiten Komparators (K2) eine der Niedrigspannungsschwelle entsprechende zweite Referenzspannung (Ref2) zugeführt werden, und
d) daß der erste Komparator (K1) während des Überschreitens der Überspannungsschwelle das erste Auswertungssignal und der zweite Komparator (K2) beim Unterschreiten der Niedrigspannungsschwelle das zweite Auswertungssignal abgibt.

3. Überspannungsschutzvorrichtung nach einem der Ansprüche 1 oder 2, gekennzeichnet durch eine der Auswerteeinrichtung zugeordnete Verzögerungsschaltung (R1, R2, Cᵥ), die bewirkt, daß die Auswerteeinrichtung (K1, K2) das erste Auswertungssignal nur dann abgibt, wenn die Überspannungsschwelle für eine Zeitdauer überschritten wird, die länger ist als die von der Verzögerungsschaltung (R1, R2, Cᵥ) vorbestimmte Verzögerungszeitdauer.

4. Überspannungsschutzvorrichtung nach Anspruch 3, dadurch gekennzeichnet, daß die Verzögerungsschaltung (R1, R2, Cᵥ) durch eine dem Spannungsüberwachungseingang (Ell) des ersten Komparators (K1) vorgeschaltete RC-Schaltung gebildet ist.

5. Überspannungsschutzvorrichtung nach Anspruch 3 oder 4, dadurch gekennzeichnet, daß eine Begrenzungseinrichtung (31; Z, D1) vorgesehen ist, deren Begrenzungsschwelle oberhalb der Generatornennspannung liegt und welche die Schalttransistoreinrichtung (27) während der Verzögerungszeitdauer in den teilweise leitenden Zustand steuert, wenn die Generatorspannung die Begrenzungsschwelle überschritten hat.

6. Überspannungsschutzvorrichtung nach Anspruch 5, dadurch gekennzeichnet, daß die Begrenzungseinrichtung (33; Z, D1) eine Zenerdiodeneinrichtung aufweist, die einen Endes mit dem Steueranschluß der Schalttransistoreinrichtung (27) gekoppelt ist und anderen Endes mit der Generatorspannung beaufschlagt wird.

7. Überspannungsschutzeinrichtung nach einem der Ansprüche 1 - 6, dadurch gekennzeichnet, daß die interne Spannungsvorsorgungsquelle (35, Cₚ) einen Kondensator (Cₚ) aufweist, der bei nicht kurzgeschlossenem Generator (11) auf die Generatornennspannung aufgeladen wird.

8. Überspannungsschutzvorrichtung nach einem der Ansprüche 1 - 7, dadurch gekennzeichnet, daß der Schalttransistoreinrichtung (27) eine Schutzdiodeneinrichtung (SD) zum Schutz vor negativen Störimpulsen parallel geschaltet ist.

9. Überspannungsschutzvorrichtung nach einem der Ansprüche 1 - 8, dadurch gekennzeichnet, daß das die Schalttransistoreinrichtung (27) in den den Generator (11) kurzschließenden Schaltzustand steuernde Ausgangssignal der Speichereinrichtung (31; 39) einer den Generatorkurzanschluß auswertenden Vorrichtung zugeführt wird.

10. Überspannungsschutzvorrichtung nach einem der Ansprüche 1 - 9, gekennzeichnet durch eine thermische Schutzeinrichtung (40), welche die Schalttransistoreinrichtung (27) bei Erreichen einer vorbestimmten oberen Chip-Temperaturschwelle in den den Generator (11) kurzschließenden Zustand und beim nachfolgenden Unterschreiten einer vorbestimmten unteren Chip-Temperaturschwelle in den den Generator (11) nicht kurzschließenden Zustand steuert.

11. Überspannungsschutzvorrichtung nach Anspruch 10, gekennzeichnet durch eine ODER-Verknüpfungsschaltung (32) mit zwei Eingängen, von denen einer an den Ausgang der thermischen Schutzeinrichtung (40) und der andere an den Ausgang der Speichereinrichtung (31) angeschlossen ist, und mit einem an den Steuereingang der Schalttransistoreinrichtung (27) angeschlossenen Ausgang.

## Claims

1. An overvoltage protection device for protection of the electrical system of a vehicle against overvoltages, the vehicle having an on-board network, which is fed by an electrical generator (11), and means connected thereto,
a) said device comprising a controllable switch means (27) which in case of overvoltage is controlled to assume a condition short-circuiting the generator (11),
**characterized in**
b) that the switch means (27) includes a switching transistor means (27) connected in parallel to the generator (11),
c) that an evaluation means (L1, K2) is provided to which the generator is applied and which issues a first evaluation signal when a predetermined overvoltage threshold is exceeded and issues a second evaluation signal when the value subsequently falls below a predetermined low voltage threshold at the short-circuited switching transistor means,
d) that a memory means is provided to which the evaluation signals can be applied and which controls the switching transistor means (27) and stores the respectively received evaluation signal up to receipt of the respective other evaluation signal and which, during storage of the first evaluation signal, controls the switching transistor means (27) to assume the switching condition short-circuiting the generator (11) and during storage of the second evaluation signal controls the switching transistor means (27) to assume the switching condition not short-circuiting the generator (11),
e) that the switching transistor means is constituted by a MOSFET (27) having its source-drain-path connected in parallel to the generator (11),
f) that the memory means (31) comprises a flip-flop (39) whose setting input (S) receives the first evaluation signal and whose resetting input (R) receives the second evaluation signal and whose output signal is supplied to the switch means (27) as switching control signal, and
g) that the overvoltage protection device has an internal voltage supply source (35, Cₚ) associated therewith which supplies the overvoltage protection device with the necessary operating voltage during the duration of the short-circuiting of the generator (11).

2. An overvoltage protection device according to claim 1, characterized in
a) that the evaluation means comprises a first and a second comparator (K1, K2), each having a voltage monitoring input (E11, E22), a reference voltage input (E21, E12) and a comparator output coupled with the memory means (31, 39),
b) that the voltage monitoring inputs (E11, E22) of both comparators are acted upon by the generator voltage or a voltage corresponding thereto,
c) that the reference voltage input (E31) of the first comparator (K1) is fed with a first reference voltage (Ref1) corresponding to the overvoltage threshold and the reference voltage input (E12) of the second comparator (K2) is fed with a second reference voltage (Ref2) corresponding to the low voltage threshold, and
d) that the first comparator (K1) issues the first evaluation signal while the overvoltage threshold is being exceeded, and the second comparator (K2) issues the second evaluation signal when the value drops below the low voltage threshold.

3. An overvoltage protection device according to any one of claims 1 or 2,
characterized by a delay circuit (R1, R2, C_{V}) associated with the evaluation means and having the effect that the evaluation means (K1, K2) issues the first evaluation signal only when the overvoltage threshold is exceeded for a period of time that is longer than the delay period predetermined by the delay circuit (R1, R2, C_{V}).

4. An overvoltage protection device according to claim 3,
characterized in that the delay circuit (R1, R2, C_{V}) is constituted by an RC circuit connected upstream of the voltage monitoring input (E11) of the first comparator (K1).

5. An overvoltage protection device according to claim 3 or 4,
characterized in that a limiting means (31; Z, D1) is provided whose limiting threshold is higher than the generator nominal voltage and which controls the switching transistor means (27) to the partly conducting state during the delay period when the generator voltage has exceeded the limiting threshold.

6. An overvoltage protection device according to claim 5,
characterized in that the limiting means (33; Z, D1) comprises a Zener diode means having one end coupled to the control terminal of the switching transistor means (27) and being acted upon at its other end by the generator voltage.

7. An overvoltage protection device according to any one of claims 1 to 6,
characterized in that the internal voltage supply source (35, C_{P}) comprises a capacitor (C_{P}) which is charged to the generator nominal voltage when the generator (11) is not short-circuited.

8. An overvoltage protection device according to any one of claims 1 to 7,
characterized in that the switching transistor means (27) has connected in parallel thereto a protective diode means (SD) for protection against negative interference pulses.

9. An overvoltage protection device according to any one of claims 1 to 8,
characterized in that the output signal of the memory means (31; 39) controlling the switching transistor means (27) to assume the switching condition short-circuiting the generator (11) is fed to a device evaluating the generator short-circuit.

10. An overvoltage protection device according to any one of claims 1 to 9,
characterized by a thermal protection means (40) controlling the switching transistor means (27), when a predetermined upper chip temperature threshold is reached, to assume the switching condition short-circuiting the generator (11) and, when the temperature thereafter drops below a predetermined lower chip temperature level, to assume the switching condition not short-circuiting the generator (11).

11. An overvoltage protection device according to claim 10,
characterized by an OR gate circuit (32) having two inputs, one thereof being connected to the output of the thermal protection means (40) and the other and thereof being connected to the output of the memory means (31), and having an output connected to the control input of the switching transistor means (27).

## Revendications

1. Dispositif de protection de l'équipement électrique d'un véhicule contre les surtensions, le véhicule comportant un réseau de bord alimenté par un générateur électrique (11) et des appareils connectés à ce réseau, le dispositif comprenant
a) un dispositif de commutation commandé (27) qui met le générateur (11) dans un état de court-circuit lors d'une surtension,
**caractérisé en ce que**
b) le dispositif de commutation (27) comprend un transistor de commutation (27) connecté en parallèle sur le générateur (11),
c) un dispositif d'évaluation (K1, K2) recevant la tension du générateur fournit un premier signal d'évaluation lors du dépassement d'un seuil de surtension prédéterminé et fournit un deuxième signal d'évaluation lorsque la tension aux bornes du dispositif de commutation court-circuité passe subséquemment en dessous d'un seuil de tension inférieur prédéterminé,
d) un dispositif de mémorisation recevant les signaux d'évaluation et commandant le transistor de commutation (27) mémorise le signal d'évaluation courant jusqu'à la réception de l'autre signal d'évaluation, met le transistor de commutation (27) dans l'état de court-circuit du générateur (11) pendant la mémorisation du premier signal d'évaluation, et met le transistor de commutation dans un état hors court-circuit du générateur (11) pendant la mémorisation du deuxième signal d'évaluation,
e) le transistor de commutation est constitué d'un transistor MOS (27) relié en parallèle sur le générateur (11) par sa région source-drain,
f) le dispositif de mémorisation (31) comprend une bascule (39) dont une entrée de mise à un (S) reçoit le premier signal d'évaluation, dont une entrée de mise à zéro (R) reçoit le deuxième signal d'évaluation, et dont le signal de sortie est fourni au dispositif de commutation (27) en tant que signal de commande de commutation, et
g) le dispositif de protection contre les surtensions est associé à une source de tension d'alimentation interne (35, Cₚ) qui fournit la tension d'alimentation nécessaire au dispositif de protection contre les surtensions pendant la durée de court-circuit du générateur (11).

2. Dispositif de protection contre les surtensions selon la revendication 1, caractérisé en ce que
a) le dispositif d'évaluation comporte un premier et un deuxième comparateur (K1, K2) dont chacun comprend une entrée de surveillance de tension (E11, E22), une entrée de tension de référence (E21, E12), et une sortie de comparaison couplée au dispositif de mémorisation (31, 39),
b) les entrées de surveillance de tension (E11, E22) des deux comparateurs (K1, K2) reçoivent la tension du générateur ou une tension correspondant à celle-ci,
c) l'entrée de tension de référence (E31) du premier comparateur (K1) reçoit une première tension de référence (Ref1) correspondant au seuil de surtension et l'entrée de tension de référence (E12) du deuxième comparateur (K2) reçoit une deuxième tension de référence (Ref2) correspondant au seuil de tension inférieur, et
d) le premier comparateur (K1) fournit le premier signal d'évaluation lors d'un dépassement du seuil de surtension et le deuxième comparateur (K2) fournit le deuxième signal d'évaluation lors du passage en dessous du seuil de tension inférieur.

3. Dispositif de protection contre les surtensions selon l'une des revendications 1 et 2, caractérisé par un circuit de retard (R1, R2, Cᵥ) associé au dispositif d'évaluation, au moyen duquel le dispositif d'évaluation (K1, K2) ne fournit le premier signal d'évaluation que lorsque le seuil de surtension est dépassé pendant une durée qui est plus longue que la durée de retard déterminée par le circuit de retard (R1, R2, Cᵥ).

4. Dispositif de protection contre les surtensions selon la revendication 3, caractérisé en ce que le circuit de retard (R1, R2, Cᵥ) est constitué d'un circuit RC placé avant l'entrée de surveillance de tension (E11) du premier comparateur (K1).

5. Dispositif de protection contre les surtensions selon la revendication 3 ou 4, caractérisé en ce qu'il comprend un dispositif de limitation (31 ; Z, D1) dont le seuil de limitation est supérieur à la tension nominale du générateur et qui met le transistor de commutation (27) à l'état partiellement conducteur pendant la durée du retard lorsque la tension du générateur a dépassé le seuil de limitation.

6. Dispositif de protection contre les surtensions selon la revendication 5, caractérisé en ce que le dispositif de limitation (33 ; Z, D1) comprend un dispositif à diode Zener dont une borne est couplée à la borne de commande du transistor de commutation (27) et dont l'autre borne reçoit la tension du générateur.

7. Dispositif de protection contre les surtensions selon l'une quelconque des revendications 1 à 6, caractérisé en ce que la source de tension d'alimentation interne (35, Cₚ) comprend un condensateur (Cₚ) qui est chargé à la tension nominale du générateur (11) lorsque celui-ci est à l'état hors court-circuit.

8. Dispositif de protection contre les surtensions selon l'une quelconque des revendications 1 à 7, caractérisé en ce qu'un dispositif de protection à diode (SD) est relié en parallèle sur le transistor de commutation (27) afin de le protéger contre des impulsions parasites négatives.

9. Dispositif de protection contre les surtensions selon l'une quelconque des revendications 1 à 8, caractérisé en ce que le signal de sortie du dispositif de mémorisation (31 ; 39) déterminant l'état court-circuité du générateur (11) par le transistor de commutation (27) est fourni à un dispositif d'évaluation de la courte mise sous tension du générateur.

10. Dispositif de protection contre les surtensions selon l'une quelconque des revendications 1 à 9, caractérisé par un dispositif de protection thermique (40) qui met le transistor de commutation (27) à l'état de court-circuit du générateur (11) lorsqu'est atteint un seuil supérieur prédéterminé de température de puce et qui met le générateur à l'état hors court-circuit lors du passage subséquent en dessous d'un seuil inférieur prédéterminé de température de puce.

11. Dispositif de protection contre les surtensions selon la revendication 10, caractérisé par un circuit OU (32) à deux entrées dont l'une est reliée à la sortie du dispositif de protection thermique (40) et dont l'autre est reliée à la sortie du dispositif de mémorisation (31), et dont la sortie est reliée à l'entrée de commande du transistor de commutation (27).
